# EUROPÄISCHE PATENTANMELDUNG

(11) **EP 2 790 075 A2**
(43) Veröffentlichungstag der Anmeldung: **15.10.2014**
(21) Anmeldenummer: 14001312.9
(22) Anmeldetag: 10.04.2014
(51) Int. Cl.: G05B 19/042, A63J 1/00, A63J 3/00, A63J 5/00, A63J 17/00

(54) **Steuerungssystem zum Steuern eines Bühnenpodestes oder mehrerer Bühnenpodestelemente, Fernbedienungseinrichtung zum Fernbedienen eines Steuerungssystems zum Steuern eines Bühnenpodestes oder mehrerer Bühnenpodestelemente sowie Verfahren zum Steuern von Bühnentecknik**

(30) Priorität: 10.04.2013 DE 102013008133
(71) Anmelder: Bütec Gesellschaft für bühnentechnische Einrichtungen m.b.H., 40822 Mettmann (DE)
(72) Erfinder: Kolberg, Ulrike, 40822 Mettmann (DE)
(74) Vertreter: Grosse Schumacher Knauer von Hirschhausen

(57) **Zusammenfassung**

Die Erfindung betrifft ein Steuerungssystem (1), zum Steuern von Bühnentechnik (2). Das Steuerungssystem (1) umfasst zumindest eine, insbesondere motorisch bewegbare oder elektrisch betätigbare, Bühnentechnik-Einrichtung (3). Es umfasst ferner eine der Bühnentechnik (2) zugeordnete, mit der Bühnentechnik-Einrichtung (3), insbesondere elektrisch und/oder elektronisch, verbundene Steuereinrichtung (4), und eine mit der Steuereinrichtung (4) und/oder mit der Bühnentechnik-Einrichtung (3) kabellos verbindbare Fernbedienungseinrichtung (5) zum Fernbedienen der mit der Steuereinrichtung (4) verbundenen Bühnentechnik-Einrichtung (3). Die Fernbedienungseinrichtung (5) umfasst eine mobile Kommunikationseinrichtung (6) oder sie ist mit einer mobilen Kommunikationseinrichtung (6) zumindest über eine Kommunikationsschnittstelle (7) verbindbar. Die Bühnentechnik-Einrichtung (3) und/oder die Steuereinrichtung (4) ist über die mobile Kommunikationseinrichtung (6) steuerbar.

## Beschreibung

### GEBIET DER ERFINDUNG

Die Erfindung betrifft ein Steuerungssystem, zum Steuern eines Bühnenpodestes oder mehrerer Bühnenpodestelemente nach dem Oberbegriff von Anspruch 1. Demnach umfasst das Steuerungssystem zumindest eine, insbesondere motorisch bewegbare oder elektrisch betätigbare, Bühnentechnik-Einrichtung. Das Steuerungssystem umfasst ferner eine mit der Bühnentechnik-Einrichtung, insbesondere elektrisch und/oder elektronisch, verbundene Steuereinrichtung, und eine mit der Steuereinrichtung und/oder mit der Bühnentechnik-Einrichtung kabellos verbindbare Fernbedienungseinrichtung zum Fernbedienen der mit der Steuereinrichtung verbundenen Bühnentechnik-Einrichtung.

Bühnentechnik-Einrichtungen können beispielsweise aus einem Bühnenpodium oder einem Bühnenpodestelement gebildet sein. Die Bühnentechnik kann zudem eine Bühnenleuchte, einen Leuchtenhänger, einen Prospektzug, einen Punktzug, eine Vorhangzuganlage und/oder ein Flugwerk umfassen. Die Bühnentechnik-Einrichtungen einer Bühne können zum Betätigen der Bühnentechnik-Einrichtungen erforderlichen Steuer- und/oder Rechnereinrichtungen einschließlich daran angeschlossener elektronischer Peripheriegeräte aufweisen oder mit diesen verbunden sein. Unterschiedliche Bühnen, beispielsweise an unterschiedlichen Veranstaltungsorten, können eine unterschiedliche Bühnentechnik respektive unterschiedliche Bühnentechnik-Komponenten aufweisen.

Im Übrigen betrifft die Erfindung eine Fernbedienungseinrichtung zum Fernbedienen eines Steuerungssystems zum Steuern eines Bühnenpodestes oder mehrerer Bühnenpodestelemente gemäß dem Oberbegriff von Anspruch 8. Demnach ist die Fernbedienungseinrichtung kabellos mit einem Sender und/oder Empfänger des Steuerungssystems verbindbar. Informationen und/oder Daten, insbesondere Telemetriedaten, sind an eine dem Bühnenpodest oder den Bühnenpodestelementen zugeordnete Sende- und/oder Empfangseinrichtung übertragbar. Die Erfindung betrifft schließlich ein Verfahren zum Steuern von Bühnentechnik und eine Verwendung einer mobilen Kommunikationseinrichtung zum Steuern bühnentechnischer Einrichtungen gemäß der Ansprüche 13 und eine Verwendung einer mobilen Kommunikationseinrichtung nach Anspruch 18.

### TECHNOLOGISCHER HINTERGRUND

Es ist bekannt, dass bühnentechnische Einrichtungen, wie etwa Podien oder Bühnenpodestelemente, durch (Elektro-)Motoren bewegbar sind. Das Steuern der bühnentechnischen Einrichtungen erfolgt über eine oder mehrere statisch angeordnete Steuereinrichtungen oder über eine zentrale Regieeinheit, die ebenfalls statisch im Umfeld der Bühne angeordnet ist. Mit der Steuereinrichtung werden die Antriebe respektive Motoren der bühnentechnischen Einrichtungen oder die bühnentechnischen Einrichtungen so gesteuert, dass diese gemäß einer (Regie-)Vorgabe oder gemäß eines Veranstaltungsplans oder -konzepts betätigt werden.

Zur Verbesserung der Handhabbarkeit der Steuereinrichtung und um die Steuerung innerhalb eines größeren Aktionsradius betätigen zu können, umfassen einige Systeme zur Steuerung bühnentechnischer Einrichtungen Fernbedienungseinrichtungen. Insbesondere kann der WO 2007/010290 A2 eine modulare Bodenanordnung mit mehreren Bodenelementen entnommen werden. Die Module gemäß der WO 2007/010290 A2 können ferngesteuert positioniert werden, wobei die Fernbedienungseinrichtung per Kabel oder mit einem Infrarot-Signal-Sender arbeitet.

Nachteilig nicht nur an dieser Einrichtung ist, dass der Aktionsradius des Anwenders einerseits durch das Kabel der Fernbedienung beschränkt wird. Anderseits sind Infrarot-Signale störempfindlich, wodurch die Sicherheit bei der (Fern-) Steuerung der bühnentechnischen Einrichtungen gefährdet werden kann.

Ein weiterer Nachteil besteht regelmäßig darin, dass das Fernsteuern der im Stand der Technik beschriebenen bühnentechnischen Einrichtungen jeweils einer bestimmten, individuell zu der bühnentechnischen Einrichtung passenden Fernbedienungseinrichtung bedarf, die ausschließlich für die jeweiligen bühnentechnischen Einrichtungen vorgesehen ist. Daher unterscheiden sich die Fernbedienungseinrichtungen unterschiedlicher bühnentechnischer Einrichtungen untereinander erheblich. Hier setzt die Erfindung ein:

### DARSTELLUNG DER ERFINDUNG

Die Aufgabe der Erfindung besteht darin, Maßnahmen anzugeben, durch die eine Bühnentechnik einfach und dennoch sicher steuerbar wird. Diese Aufgabe wird durch ein Steuerungssystem mit den kennzeichnenden Merkmalen des Anspruchs 1 gelöst. Weitere Ausgestaltungen der Erfindung werden in den Unteransprüchen beschrieben.

Die Erfindung sieht demnach vor, dass die Fernbedienungseinrichtung eine mobile Kommunikationseinrichtung umfasst oder mit einer mobilen Kommunikationseinrichtung zumindest über eine Kommunikationsschnittstelle verbindbar ist, wodurch die Bühnentechnik-Einrichtung und/oder die Steuereinrichtung über die mobile Kommunikationseinrichtung steuerbar ist. Unabhängig davon, wie die bühnentechnischen Einrichtungen beschaffen sind, d. h. unabhängig von deren Ausmaß und von der Komplexität der bewegbaren Komponenten, kann mit nur einer erfindungsgemäßen Fernbedienungseinrichtung respektive mit jedem oder nahezu jedem mobilen Kommunikationseinrichtung jene bühnentechnische Einrichtung gesteuert werden, die mit dem erfindungsgemäßen Steuerungssystem ausgerüstet ist.

Die mobile Kommunikationseinrichtung umfasst ein Mobiltelefon (Handy), ein SmartPhone, einen mobilen Computer, einen Tablet-Computer (oder Tablet-Personalcomputer, Tablet-PC), einen Personal Digital Assistent (PDA), oder eine vergleichbare Vorrichtung. Die mobile Kommunikationseinrichtung ist mit einem datenverarbeitenden Anwendungsprogramm für Mobilgeräte (App), insbesondere über eine Funkschnittstelle der mobilen Kommunikationseinrichtung, ausrüstbar. So können Steuerungsfunktionen von der mobilen Kommunikationseinrichtung übernommen werden. Ein Vorteil dieser Ausgestaltung der Erfindung liegt darin, dass nahezu jeder Anwender von Steuerungssystemen für bühnentechnische Einrichtungen mobile Kommunikationseinrichtungen wie SmartPhones oder Tablet-PCs besitzt und/oder mit sich führt. Dies trifft daher mit hoher Wahrscheinlichkeit auch auf einen Bühnen- oder Veranstaltungstechniker zu, dessen Aufgabe es ist, bühnentechnische Einrichtungen vor, während oder nach einer auf der Bühne stattfindenden Veranstaltung zu steuern.

Es kann zweckmäßig sein, wenn die Kommunikationsschnittstelle eine Funkschnittstelle und/oder eine elektrische Steckverbindung umfasst. Damit wird eine (Daten-) Verbindung zwischen der mobilen Kommunikationseinrichtung und der Fernbedienungseinrichtung oder der Steuereinrichtung auf einfache Weise herstellbar. Die Funkschnittstelle kann über einen WLAN-Adapter verfügen (Wireless Local Area Network; WLAN) oder einen Mobilfunk-Standard verwenden, wie etwa UMTS (Universal Mobile Telecommunications System) oder GPRS (General Packet Radio Service).

Die Steuerungseinrichtung kann bevorzugt so beschaffen sein, dass der Steuereinrichtung und/oder der Bühnentechnik-Einrichtung eine Sende- und/oder Empfangseinrichtung zum Senden und/oder Empfangen von aus der Fernbedienungseinrichtung und/oder aus der mobilen Kommunikationseinrichtung ausgesandten Signalen zugeordnet ist. Die Sende-/Empfangseinrichtung kann der Steuereinrichtung respektive der Regieeinrichtung zugeordnet sein. Die von der Empfangseinrichtung empfangenen Informationen oder (Telemetrie-)Daten werden an die Steuereinrichtung weitergegeben und dort in Steuerbefehle zum Steuern der Bühnentechnik-Einrichtung(en) umgesetzt. Bei einer Bühnentechnik-Einrichtung, die in mehreren Raumachsen bewegbar ist, können die (Telemetrie-)Daten Datenbestandteile für jede der zu steuernden Achsen umfassen.

Bevorzugt kann eine Datenbank vorgesehen sein, die mit der Fernbedienungseinrichtung und/oder mit der mobilen Kommunikationseinrichtung, insbesondere über eine Funkschnittstelle der mobilen Kommunikationseinrichtung, zum Informations- und/oder Datenaustausch verbindbar ist. Auf der Datenbank sind Informationen und/oder Daten zum Freigeben und/oder zur Steuerung der Steuereinrichtung und/oder der Bühnentechnik-Einrichtung hinterlegt. Die Datenbank kann Bestandteil einer Rechnereinrichtung oder eines Computers sein, beispielsweise eines Leitrechners. Sie kann ein Datenbankspeichermedium und/oder eine Prozessoreinrichtung umfassen. In dem Leitrechner können die Steuerbefehle in digitale Signale transformiert werden, die an eine Regeleinrichtung gesendet werden. Es kann wahlweise eine Auswertung einer Rückmeldung nach einer Ist-Zustandsüberwachung der zu steuernden/regelnden Bühnentechnik-Einrichtung vorgesehen sein. Es kann zweckmäßig sein, wenn die Sende-/Empfangseinrichtung der Datenbank zugeordnet ist. Freigabedaten können Passwort und/oder Code-Informationen umfassen oder PIN/TAN-Daten (Persönliche Identifikationsnummer, PIN; Transaktionsnummer, TAN). Mit den Freigabedaten kann erreicht werden, dass ein Anwender, der die Freigabedaten zur Verfügung hat, mit dem Anwendungsprogramm für Mobilgeräte, d. h. mit der App, Steuerbefehle übertragen kann, oder dass übertragene Steuerbefehle an die Steuereinrichtung weitergegeben werden. Ohne die Freigabedaten wäre somit die Bühnentechnik nicht oder nur eingeschränkt steuerbar. Die Bereitstellung der Freigabedaten kann durch den Betreiber der Bühnentechnik oder durch den Hersteller/Anbieter der Bühnentechnik erfolgen. Das Bereitstellen der Freigabedaten kann mit einer einmaligen Gebühr, einer regelmäßigen Gebühr oder mit vergleichbaren Zahlungen an den Betreiber/Hersteller verbunden sein. Durch die Berücksichtigung der Freigabedaten wird vermieden, dass sich Unbefugte Zugang zu der Steuerung der Bühnentechnik verschaffen.

Die mobile Kommunikationseinrichtung ist mit einem datenverarbeitenden Anwendungsprogramm für Mobilgeräte, insbesondere über eine Funkschnittstelle der mobilen Kommunikationseinrichtung, ausrüstbar. Bei dem datenverarbeitenden Anwendungsprogramm für Mobilgeräte kann es sich um eine Applikation respektive um eine so genannte "App" handeln. Das datenverarbeitende Anwendungsprogramm für Mobilgeräte kann auf der Datenbank des Steuerungssystems so hinterlegt sein, dass ein Anwender des Steuerungssystems das datenverarbeitende Anwendungsprogramm für Mobilgeräte bei Bedarf - beispielsweise über eine Netzwerkverbindung oder über das Internet - auf die mobile Kommunikationseinrichtung überspielen (herunterladen) kann. Insbesondere kann das datenverarbeitende Anwendungsprogramm für Mobilgeräte auf der Datenbank hinterlegbar sein. Wahlweise kann das datenverarbeitende Anwenderprogramm für Mobilgeräte in einem so genannten App-Store, insbesondere gegen ein Entgelt oder in Zusammenhang mit einem Abonnement, verfügbar sein. Das datenverarbeitende Anwendungsprogramm kann, etwa bedarfsweise und/oder in regelmäßigen Abständen, eine Aktualisierung von Programmkomponenten, etwa von der Datenbank, abrufen, wodurch sicher gestellt werden kann, dass die Anwendungssoftware den Anforderungen an die zu steuernde Bühnentechnik stets in bestmöglicher Weise genügt.

Das Hinterlegen des Anwendungsprogramms kann vom Betreiber der bühnentechnischen Einrichtung oder vom Anbieter der bühnentechnischen Einrichtung erfolgen. Das datenverarbeitende Anwendungsprogramm für Mobilgeräte kann von einer Datenbank auf die mobile Kommunikationseinrichtung, insbesondere auf einen Datenspeicher der mobilen Kommunikationseinrichtung, übertragbar sein, etwa über das Internet, und etwa gegen Entrichtung eines Nutzungsentgeltes. Die Nutzung des datenverarbeitenden Anwenderprogramms für Mobilgeräte kann ebenfalls Gegenstand einer Entgeltvereinbarung zwischen Anbieter/Betreiber und Anwender sein.

Gemäß einer bevorzugten Ausgestaltung des erfindungsgemäßen Steuerungssystems ist vorgesehen, dass Daten- und/oder Informationen zwischen der mobilen Kommunikationseinrichtung und der Steuereinrichtung respektive einer Systemkomponente des Steuerungssystems unter Beteiligung eines lokalen, insbesondere drahtlosen, Netzwerkes (LAN, WLAN) und/oder des Internets austauschbar sind. Die Datenbank und/oder die mobile Kommunikationseinrichtung umfasst dabei eine, insbesondere drahtlose, Internetverbindung. Es kann ferner zumindest eine Schnittstelle für ein drahtloses (lokales) Netzwerk (Wireless Local Area Network, WLAN) vorgesehen sein.

Maßnahmen, durch die eine beliebige bühnentechnische Einrichtung einfach und dennoch sicher steuerbar wird, ergeben sich auch durch eine Fernbedienungseinrichtung zum Fernbedienen eines Steuerungssystems zum Steuern eines Bühnenpodestes oder eines oder mehrerer Bühnenpodestelementen gemäß Anspruch 8. Die Fernbedienungseinrichtung ist kabellos mit einer Sende-Empfangseinrichtung der Bühnentechnik, insbesondere mit einem Empfänger des Steuerungssystems, verbindbar, wobei Informationen und/oder Daten, insbesondere Telemetriedaten, an eine dem Bühnenpodest und/oder den Bühnenpodestelementen zugeordnete Empfangseinrichtung übertragbar sind. Unter Telemetriedaten werden hier insbesondere solche Daten verstanden, die einen bestimmten (Bewegungs-)Zustand oder eine bestimmte Position eines oder mehrerer bestimmter Bühnentechnik-Einrichtungen betreffen. Sie können u. A. aus einer Rückmeldung, beispielsweise der Achszustände, der Bühnentechnik-Einrichtungen resultieren.

So kann etwa vorgesehen sein, dass Bühnentechnik-Einrichtung A (beispielsweise ein Podestelement oder eine Kombination mehrerer Bühnenpodestelemente) zum Zeitpunkt t₁ von einer Position p_{Anfang} mit der Geschwindigkeit (oder Bewegungscharakteristik) v₁ in eine Position p_{End} bewegt wird oder werden.

Indem die Fernbedienungseinrichtung erfindungsgemäß geeignet ist, eine mobile Kommunikationseinrichtung aufzunehmen und/oder mit einer mobilen Kommunikationseinrichtung zumindest über eine Kommunikationsschnittstelle verbindbar zu sein, ist eine Steuereinrichtung des Bühnenpodestes oder Bühnenpodestelemente durch Benutzung der mobilen Kommunikationseinrichtung fernsteuerbar. Die Informationen respektive Daten für das Fernsteuern umfassen beispielsweise das zu steuernde Objekt (Bühnentechnik-Einrichtung A), den Zeitpunkt t₁, die Positionen p_{Anfang} und p_{End} sowie die Charakteristik v₁. Unter anderem diese Daten werden mittels der mobilen Kommunikationseinrichtung an die Steuereinrichtung übertragen. Von dort werden sie beispielsweise mit einem Datenübertragungs- und/oder BUS-System oder über ein Netzwerk (beispielsweise ein Local Area Network, LAN, bevorzugt mit Ethernet-Protokollierungs-Standard) an die Bühnentechnik-Einrichtung (in dem genannten Beispiel: A) übertragen und bringen die Bühnentechnik-Einrichtung in die gewünschte Position oder in den gewünschten Zustand.

Der Empfang der Daten kann durch eine Empfangseinrichtung erfolgen. Die Empfangseinrichtung kann einem Rechner zugeordnet sein oder Bestandteil eines Rechners sein. Die von der Empfangseinrichtung respektive dem Rechner empfangenen Daten werden von einem Datenübertragungs- oder BUS-System oder über ein Netzwerk (beispielsweise ein Local Area Network, LAN, bevorzugt mit Ethernet-Standard) an die Steuereinheit weitergegeben. Wahlweise kann in dem Rechner eine Verarbeitung der (Telemetrie-)Daten vorgesehen sein, so dass diese von der Steuerungseinrichtung in Steuerungsbefehle übersetzbar sind.

Zur Vereinfachung der Handhabung der erfindungsgemäßen Fernsteuereinrichtung kann vorgesehen sein, dass die Fernbedienungseinrichtung und/oder die mobile Kommunikationseinrichtung eine Stromversorgung, insbesondere einen wiederaufladbaren Akkumulator, umfassen.

Zur Verbesserung der Sicherheitsanforderungen kann vorgesehen sein, dass die Fernbedienungseinrichtung zumindest einen Sicherheitsschalter umfasst, mit dem eine, mehrere und/oder sämtliche fernbediente Bühnentechnik-Einrichtungen der Bühnentechnik anhaltbar respektive deaktivierbar sind. Der Sicherheitsschalter kann als "Not-Aus"-Schalter oder "Not-Aus"-Taster gebildet sein. Die Betätigung des Sicherheitsschalters aktiviert ein unabhängiges Protokoll, insbesondere über eine bidirektionale Funkstrecke, wodurch alle bewegten Bühnentechnik-Einrichtungen angehalten werden oder in einen sicheren Zustand versetzt werden. Der Sicherheitsschalter respektive das durch den Sicherheitsschalter aktivierte Protokoll hat eine höhere Priorität gegenüber allen anderen Protokollen, insbesondere solchen, die durch die mobile Kommunikationseinrichtung aktiviert sind. Für die Datenübertragung der bei Betätigung des Sicherheitsschalters zu übertragenden Informationen kann eine separate Funkstrecke zwischen der Fernbedienungseinrichtung und einem Empfänger des Steuerungssystems zur Steuerung bühnentechnischer Einrichtungen vorgesehen sein.

Es kann zweckmäßig sein, wenn die Fernbedienungseinrichtung einen Adapter aufweist, der zur Herstellung einer Datenverbindung geeignet ist. Die Datenverbindung kann über ein drahtloses Netzwerk (Wireless Local Area Network, WLAN) erfolgen und/oder durch eine Funkschnittstelle, insbesondere für eine bidirektionale Funkstrecke.

Die Fernbedienungseinrichtung kann Bewegungssensoren umfassen, die eine, insbesondere Dreh- und/oder Schwenk-, Bewegung der Fernbedienungseinrichtung und/oder der mobilen Kommunikationseinrichtung erfassen, wobei die erfassten Bewegungen in Befehle, insbesondere in Steuerbefehle zum Steuers des Bühnenpodestes oder der Bühnenpodestelemente, umwandelbar sind, so dass das Bühnenpodest oder zumindest ein Bühnenpodestelement durch Bewegen der Fernbedienungseinrichtung steuerbar ist. Dabei können Bewegungssensoren der mobilen Kommunikationseinrichtung mitberücksichtigt oder verwendet werden. Wird die Fernbedienungseinrichtung mit der Kommunikationseinrichtung beispielsweise nach links (rechts) geschwenkt oder gedreht, kann diese Bewegung der Fernbedienungseinrichtung in eine Bewegung des Bühnenpodestes nach links (rechts) übertragen werden. Wahlweise kann durch ein Neigen der Fernbedienungseinrichtung eine Neigungsverstellung des angesteuerten Bühnenpodestelements erzielt werden. Eine Bewegung nach oben (unten) der Fernbediendung kann in eine Höhenverstellung transformiert werden (rauf/runter).

Die Fernbedienungseinrichtung kann so beschaffen sein, dass von der Steuereinrichtung erzeugte und/oder gesendete Störungsmeldungen durch die Fernbedienungseinrichtung empfangen werden und/oder angezeigt werden. Dies kann wahlweise über die Kommunikationseinrichtung erfolgen oder wahlweise durch die Fernbedienungseinrichtung, in der die Kommunikationseinrichtung angeordnet ist. Im Falle einer Störungsmeldung können einzelne oder mehrere der Steuerkomponenten des Programms blockiert sein. Zum Empfangen und/oder Anzeigen einer Störungsmeldung kann vorgesehen sein, dass die Fernbedienungseinrichtung über ein Störungs-Modul verfügt, dass eine Störungs-Empfangs-Einheit und eine Störungsanzeige-Einheit umfasst. Es kann eine Entstörungs-Sendeeinheit vorgesehen sein, um die Störungsmeldung zu verwerfen, falls die Störung der Bühnentechnik, etwa durch einen Bühnentechniker, beseitigt worden ist.

Maßnahmen, durch die eine beliebige bühnentechnische Einrichtung mit einfachen und dennoch sicheren Mitteln und Wegen steuerbar wird, ergeben sich auch durch ein Verfahren zum Steuern von Bühnentechnik nach Anspruch 13. Die Bühnentechnik umfasst demnach zumindest eine, insbesondere motorisch bewegbare oder elektrisch betätigbare, Bühnentechnik-Einrichtung. Die Bühnentechnik-Einrichtung kann über einen Antrieb bewegbar sein, der bevorzugt Bestandteil der Bühnentechnik-Einrichtung ist. Alternativ kann der Antrieb auch außerhalb der Bühnentechnik-Einrichtung angeordnet sein und zwischen Antrieb und Bühnentechnik-Einrichtung kann eine mechanische Verbindung bestehen. Die Bühnentechnik-Einrichtung kann auch anderweitig insbesondere elektrisch betätigbar sein. Sofern die Bühnentechnik-Einrichtung ein Scheinwerfer ist, kann dieser ein- und/oder ausschaltbar und/oder regulierbar respektive dimmbar sein. Er kann wahlweise positionierbar und hinsichtlich seiner Farbwiedergabe veränderbar sein.

Die Bühnentechnik umfasst ferner eine der Bühnentechnik zugeordnete, mit der Bühnentechnik-Einrichtung, insbesondere elektrisch und/oder elektronisch, verbundenen Steuereinrichtung, und eine mit der Steuereinrichtung und/oder mit der Bühnentechnik-Einrichtung kabellos verbindbare Fernbedienungseinrichtung zum Fernbedienen der mit der Steuereinrichtung verbundenen Bühnentechnik-Einrichtung. Die Fernbedienungseinrichtung wird aus einer mobilen Kommunikationseinrichtung gebildet. Alternativ wird die mobile Kommunikationseinrichtung in die Fernbedienungseinrichtung eingesetzt und mit dieser elektrisch und/oder informationstechnisch verbunden. Eine Bühnentechnik-Einrichtung und/oder die Steuereinrichtung ist über die mobile Kommunikationseinrichtung steuerbar.

Es kann vorgesehen sein, dass zum Steuern der Bühnentechnik ein datenverarbeitendes Anwendungsprogramm für Mobilgeräte vorgesehen ist, welches auf die mobile Kommunikationseinrichtung, insbesondere auf einen Datenspeicher der mobilen Kommunikationseinrichtung, herunterladbar ist, wobei das Herunterladen von einer der Bühnentechnik zugeordneten Datenbank erfolgt. Das datenverarbeitende Anwendungsprogramm für Mobilgeräte kann von dem Anwender konfigurierbar sein, wodurch der Anwender (mit-)entscheiden kann, welche konkreten Steuerbefehle erzeugbar sein sollen und welche nicht. Es können Anwenderprogramme für verschiedene Betriebssysteme der mobilen Kommunikationseinrichtung und es können verschiedene Nutzeroberflächen vorgesehen sein. Es können vom Betreiber einer Bühne oder vom Anbieter einer Bühne für diese eine Bühne wahlweise mehrere Anwenderprogramme oder Anwenderprogrammversionen angeboten werden, die unterschiedliche Berechtigungen für Anwender mit unterschiedlichen Aufgabenkreisen vorsehen.

Vor oder nach dem Herunterladen des datenverarbeitenden Anwendungsprogramms kann eine Freischaltung und/oder Authentifizierung des Anwenders und/oder Zugangskontrolle durch den Anbieter erfolgen. Dies kann in Lizenzanalogie erfolgen. Das erfindungsgemäße Verfahren kann so beschaffen sein, dass es einer im Zusammenhang mit Bühnentechnik an sich bekannten Sicherheitsanforderungsstufe (Safety Integrity Level, SIL) genügt, insbesondere der Sicherheitsanforderungsstufe SIL 1 oder SIL 2 oder SIL 3. Die SIL-Klassifikation genügt der internationalen Norm IEC 61508 gemäß der Internationalen Elektrotechnischen Kommission (International Electrotechnical Commission, IEC).

Maßnahmen, durch die eine beliebige bühnentechnische Einrichtung einfach und dennoch sicher steuerbar wird, ergeben sich auch durch eine Verwendung einer mobilen Kommunikationseinrichtung, wie etwa eines SmartPhones oder eines Tablet-Computers, gemäß Anspruch 18. Demnach sind mit der mobilen Kommunikationseinrichtung eine oder mehrere Bühnentechnik-Einrichtungen steuerbar, wobei die Bühnentechnik-Einrichtung aus einer Gruppe von Einrichtungen stammt, die ein Bühnenpodium, ein Bühnenpodestelement, eine Bühnenleuchte, ein Leuchtenhänger, ein Prospektzug, ein Punktzug, eine Vorhangzuganlage und/oder ein Flugwerk sowie weitere Bühnentechnik-Einrichtungen umfasst.

Bei der Verwendung der Kommunikationseinrichtung kann vorgesehen sein, dass das Steuern der Bühnentechnik über ein datenverarbeitendes Anwendungsprogramm für Mobilgeräte erfolgt, insbesondere über eine auf einer Datenbank des Betreibers der Bühnentechnik herunterladbare Applikation (App). Die mobile Kommunikationseinrichtung kann wahlweise in eine Fernbedienungseinrichtung mit einer Sicherheitsschaltung respektive einem Sicherheitsschalter mit Not-Aus-Funktion einsetzbar sein, wodurch das Fernsteuern der Bühnentechnik-Einrichtung einer Sicherheitsanforderungsstufe (Safety Integrity Level, SIL) genügt, insbesondere der Sicherheitsanforderungsstufe SIL 1 oder SIL 2 oder SIL 3.

Durch die Erfindung wird erreicht, dass eine beliebige Bühnentechnik - unabhängig von der Größe oder der Komplexität der bühnentechnischen Einrichtungen - auf einfache Weise steuerbar wird. Der Techniker oder Anwender verwendet zur Steuerung (s)eine mobile Kommunikationseinrichtung, beispielsweise (s)ein SmartPhone oder (s)ein Tablet-Computer. Um die Bühnentechnik steuern zu können, überspielt er auf (s)eine mobile Kommunikationseinrichtung, insbesondere auf einen Datenspeicher (s)einer mobilen Kommunikationseinrichtung ein datenverarbeitendes Anwendungsprogramm für Mobilgeräte, beispielsweise eine App. Dieses Überspielen des Anwenderprogramms erfolgt beispielsweise drahtlos über eine mobile Internetverbindung der mobilen Kommunikationseinrichtung oder über eine (Funk-) Schnittstelle der mobilen Kommunikationseinrichtung innerhalb eines (drahtlosen) Netzwerkes.

Das datenverarbeitende Anwendungsprogramm für Mobilgeräte ist auf die zu steuernde Bühnentechnik abgestimmt. Bei einer kleinen Bühne mit wenigen bühnentechnischen Einrichtungen umfasst das Anwenderprogramm wenige Steuermodule, bei einer komplexen Bühne mit einer Vielzahl an unterschiedlichen Bühnentechnik-Einrichtungen umfasst das Anwenderprogramm entsprechend viele und ggf. entsprechend umfangreiche Steuermodule respektive Programmkomponenten.

Das Anwenderprogramm wird von dem Anwender auf der mobilen Kommunikationseinrichtung bedient. Das Anwenderprogramm gestattet dem Anwender die Eingabe von Daten, die von der Kommunikationseinrichtung direkt oder mittels einer der Kommunikationseinrichtung zugeordneten Fernbedienungseinrichtung an eine der Bühnentechnik zugeordnete Sende-/Empfangseinrichtung übertragbar sind.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Steuerungssystems zum Steuern bühnentechnischer Einrichtungen dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUR

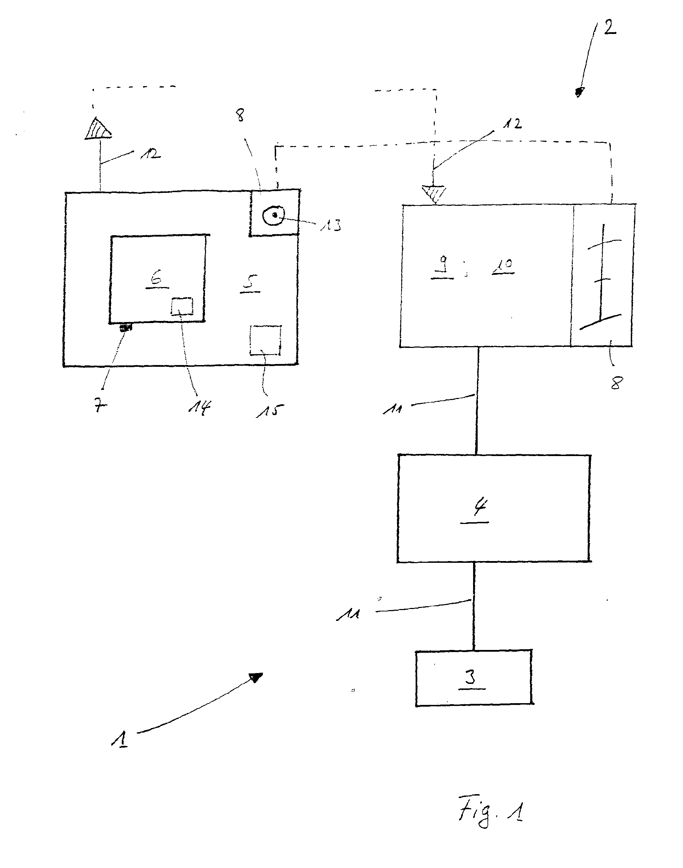

In der Zeichnung zeigt
- Fig. 1: eine schematische Darstellung eines Steuerungssystems zum Steuern bühnentechnischer Einrichtungen.

### DETAILLIERTE BESCHREIBUNG VON AUSFÜHRUNGSBEISPIELEN

Der Fig. 1 kann schematisch ein Steuersystem 1 zum Steuern von Bühnentechnik 2 entnommen werden. Das Steuerungssystem 1 umfasst zumindest eine insbesondere elektrisch betätigbare Bühnentechnik-Einrichtung 3. Das Steuerungssystem 1 umfasst ferner eine der Bühnentechnik 2 zugeordnete, mit der Bühnentechnik-Einrichtung 3, insbesondere elektrisch und/oder elektronisch, verbundene Steuereinrichtung 4. Im Übrigen ist eine mit der Steuereinrichtung 4 und/oder mit der Bühnentechnik-Einrichtung 3 kabellos verbindbare Fernbedienungseinrichtung 5 zum Fernbedienen der mit der Steuereinrichtung 4 verbundenen Bühnentechnik-Einrichtung 3 vorgesehen.

Die Fernbedienungseinrichtung 5 gemäß Fig. 1 umfasst eine mobile Kommunikationseinrichtung 6. Die Fernbedienungseinrichtung 5 und die mobile Kommunikationseinrichtung 6 sind über eine Kommunikationsschnittstelle 7 verbindbar. Die Bühnentechnik-Einrichtung 3 respektive die Steuereinrichtung 4 sind über die mobile Kommunikationseinrichtung 6 steuerbar. Die Fernbedienungseinrichtung 5 kann eine interne Stromversorgung 15 aufweisen, die beispielsweise einen oder mehrere Akkumulatoren umfasst.

Bei der mobilen Kommunikationseinrichtung 6 gemäß der schematischen Darstellung in Fig. 1 kann es sich um ein Mobiltelefon (Handy), ein SmartPhone, einen mobilen Computer oder einen Tablet-Computer handeln. Die Kommunikationsschnittstelle 7 umfasst gemäß Fig. 1 eine Funkschnittstelle 12 oder eine elektrische Steckverbindung. Die mobile Kommunikationseinrichtung 6 kann einen Datenspeicher 14 umfassen, auf dem beispielsweise ein datenverarbeitendes Anwenderprogramm für Mobilgeräte hinterlegbar ist.

Der Bühnentechnik 2 ist eine Sende- und/oder Empfangseinrichtung 8, insbesondere zum Empfangen von aus der Fernbedienungseinrichtung 5 ausgesandten Signalen, zugeordnet. Die Sende- und/oder Empfangseinrichtung 8 ist gemäß Fig. 1 einem (Leit-)Rechner 9 zugeordnet, der eine Datenbank 10 umfassen kann. Der Rechner 9 respektive die Datenbank 10 ist über ein Datenübertragungssystem 11 mit der Steuer- oder Regieeinrichtung 4 daten- und informationstechnisch verbunden. Von der Steuereinrichtung 4 werden die Steuerinformationen an die Bühnentechnik-Einrichtung 3 übertragen.

Die Datenbank 10 ist mit der Fernbedienungseinrichtung 5 und mit der mobilen Kommunikationseinrichtung 6, insbesondere über eine Sende- und Empfangseinrichtung 8 und/oder über Funkschnittstelle 12, zum Informations- und/oder Datenaustausch verbindbar. Auf der Datenbank 10 sind Informationen und/oder Daten zum Steuern der Steuereinrichtung 4 und/oder der Bühnentechnik-Einrichtung 3 hinterlegt.

Die mobile Kommunikationseinrichtung 6 ist mit einem datenverarbeitenden Anwendungsprogramm für Mobilgeräte, insbesondere über eine Funkschnittstelle 12 der mobilen Kommunikationseinrichtung 6, ausrüstbar.

Durch die Erfindung wird erreicht, dass eine beliebige Bühnentechnik 2 - unabhängig von der Größe oder der Komplexität der bühnentechnischen Einrichtungen 3-auf einfache Weise steuerbar wird. Der Techniker oder Anwender verwendet zum Steuern seine mobile Kommunikationseinrichtung 6, beispielsweise sein SmartPhone oder sein Tablet-Computer. Um die Bühnentechnik 2 steuern zu können, überspielt er auf seine mobile Kommunikationseinrichtung 6, insbesondere auf einen Datenspeicher 14 seiner mobilen Kommunikationseinrichtung 6 ein datenverarbeitendes Anwendungsprogramm für Mobilgeräte, beispielsweise eine App. Die App respektive die von der App erzeugte Oberfläche kann an die Bedürfnisse des Anwenders im Hinblick auf die geplante Verwendung der Bühnentechnik 2 anpassbar sein. Dieses Überspielen des Anwenderprogramms erfolgt beispielsweise drahtlos über eine mobile Internetverbindung der mobilen Kommunikationseinrichtung 6 oder über eine (Funk-)Schnittstelle 12 der mobilen Kommunikationseinrichtung 6 innerhalb eines (drahtlosen) Netzwerkes.

Das datenverarbeitende Anwendungsprogramm für Mobilgeräte ist auf die zu steuernde Bühnentechnik 2 abgestimmt oder zumindest abstimmbar. Bei einer kleinen Bühne mit wenigen bühnentechnischen Einrichtungen umfasst das Anwenderprogramm wenige Steuermodule, bei einer komplexen Bühne mit einer Vielzahl an unterschiedlichen Bühnentechnik-Einrichtungen 3 umfasst das Anwenderprogramm entsprechend viele und ggf. entsprechend umfangreiche Steuermodule.

Das Anwenderprogramm wird von dem Anwender auf der mobilen Kommunikationseinrichtung 6 bedient. Das Anwenderprogramm gestattet dem Anwender die Eingabe von Daten, die direkt oder mittels einer Fernbedienungseinrichtung 5 an einen der Bühnentechnik 2 zugeordneten Empfänger 8 übertragbar sind.

Die Daten werden insbesondere über die Fernbedienungseinrichtung 5 per Funk auf einen Rechner 9 übertragen, dort verarbeitet und über ein Datenübertragungssystem 11 zur Steuereinrichtung 4 weitergeleitet, von wo aus die Bühnentechnik-Einrichtung 3 zum Zweck ihrer Steuerung betätigt wird.

Sollte eine hinsichtlich der Bühnensicherheit kritische Situation eintreten, kann der Anwender einen Sicherheitsschalter 13 an der Fernbedienungseinrichtung 5 betätigen. Dadurch wird ein Protokoll gestartet, mit dem alle Bühnentechnik-Einrichtungen 3 gestoppt und/oder deaktiviert werden. Das Signal zum Starten des Protokolls wird von der Fernbedienungseinrichtung 5 auf einer Funkstrecke zu einem Empfänger, insbesondere einer Sende- und/oder Empfangseinrichtung 8, der Bühnentechnik 2 übertragen. Indem die Funkstrecke für einen bidirektionalen Informationsaustausch vorgesehen ist, kann von der Bühnentechnik 2 ein Bestätigungssignal an die Fernbedienungseinrichtung 5 respektive an das mobile Kommunikationseinrichtung 6 übermittelt werden.

### BEZUGSZEICHENLISTE

- 1: Steuerungssystem
- 2: Bühnentechnik
- 3: Bühnentechnik-Einrichtung
- 4: Steuereinrichtung
- 5: Fernbedienungseinrichtung
- 6: mobile Kommunikationseinrichtung
- 7: Kommunikationsschnittstelle
- 8: Sende- und/oder Empfangseinrichtung
- 9: Rechner
- 10: Datenbank
- 11: Datenübertragungssystem
- 12: Funkschnittstelle, Adapter
- 13: Sicherheitsschalter
- 14: Datenspeicher
- 15: Stromversorgung

## Patentansprüche

1. Steuerungssystem (1), zum Steuern eines Bühnenpodestes oder eines oder mehrerer Bühnenpodestelementen, wobei das Steuerungssystem (1)
zumindest eine, insbesondere motorisch bewegbare oder elektrisch betätigbare, Bühnentechnik-Einrichtung (3),
eine mit der Bühnentechnik-Einrichtung (3), insbesondere elektrisch und/oder elektronisch, verbundene Steuereinrichtung (4), und
eine mit der Steuereinrichtung (4) und/oder mit der Bühnentechnik-Einrichtung (3) kabellos verbindbare Fernbedienungseinrichtung (5) zum Fernbedienen der mit der Steuereinrichtung (4) verbundenen Bühnentechnik-Einrichtung (3)
umfasst, **dadurch gekennzeichnet, dass** die Fernbedienungseinrichtung (5) eine mobile Kommunikationseinrichtung (6) umfasst oder mit einer mobilen Kommunikationseinrichtung (6) zumindest über eine Kommunikationsschnittstelle (7) verbindbar ist, wodurch die Bühnentechnik-Einrichtung (3) und/oder die Steuereinrichtung (4) über die mobile Kommunikationseinrichtung (6) steuerbar ist, wobei die mobile Kommunikationseinrichtung (6) ein Mobiltelefon (Handy), ein SmartPhone, einen mobilen Computer, einen Tablet-Computer, einen Personal Digital Assistent (PDA), oder eine vergleichbare Vorrichtung umfasst, und wobei
die mobile Kommunikationseinrichtung (6) mit einem datenverarbeitenden Anwendungsprogramm für Mobilgeräte (App), insbesondere über eine Funkschnittstelle (12) der mobilen Kommunikationseinrichtung (6), ausrüstbar ist.

2. Steuerungssystem (1) nach Anspruch 1, **dadurch gekennzeichnet, dass** die Kommunikationsschnittstelle (7) eine Funkschnittstelle (12) und/oder eine elektrische Steckverbindung umfasst.

3. Steuerungseinrichtung (1) nach Anspruch 1 oder 2, **dadurch gekennzeichnet, dass** der Steuereinrichtung (4) und oder der Bühnentechnik-Einrichtung (3)eine Sende- und/oder Empfangseinrichtung (8) zum Senden/Empfangen von, insbesondere aus der Fernbedienungseinrichtung (5) ausgesandten, Signalen zugeordnet ist.

4. Steuerungssystem (1) nach einem der Ansprüche 1 bis 3, **gekennzeichnet durch** eine Datenbank (10), die mit der Fernbedienungseinrichtung (5) und/oder mit der mobilen Kommunikationseinrichtung (6), insbesondere über eine Funkschnittstelle (12) der mobilen Kommunikationseinrichtung (6), zum Informations- und/oder Datenaustausch verbindbar ist, wobei auf der Datenbank (10) Informationen und/oder Daten zum Freigeben und/oder Steuern der Steuereinrichtung (4) und/oder der Bühnentechnik-Einrichtung (3) hinterlegbar sind.

5. Steuerungssystem (1) nach einem der Ansprüche 1 bis 4, **dadurch gekennzeichnet, dass** das datenverarbeitende Anwendungsprogramm für Mobilgeräte auf der Datenbank (10) hinterlegbar ist, und dass das datenverarbeitende Anwendungsprogramm für Mobilgeräte von der Datenbank (10) auf die mobile Kommunikationseinrichtung (6), insbesondere auf einen Datenspeicher (14) der mobilen Kommunikationseinrichtung (6), übertragbar ist, und/oder dass Freigabedaten auf der Datenbank (10) hinterlegbar sind, mit denen die Steuereinrichtung (4) und/oder das datenverarbeitende Anwendungsprogramm für Mobilgeräte für einen Anwender freigebbar ist.

6. Steuerungssystem (1) nach einem der Ansprüche 1 bis 5, **dadurch gekennzeichnet, dass** Daten- und/oder Informationen, insbesondere Freigabedaten, zwischen der mobilen Kommunikationseinrichtung (6) und einer Systemkomponente des Steuerungssystems (1) unter Beteiligung eines lokalen, insbesondere drahtlosen, Netzwerkes und/oder des Internets austauschbar sind, wobei die Datenbank (10) und/oder die mobile Kommunikationseinrichtung (6) eine, insbesondere drahtlose, Internetverbindung umfassen.

7. Steuerungssystem (1) nach einem der Ansprüche 1 bis 6, **gekennzeichnet durch** zumindest eine Schnittstelle für ein drahtloses lokales Netzwerk (Wireless Local Area Network, WLAN).

8. Fernbedienungseinrichtung (5) zum Fernbedienen eines Steuerungssystems zum Steuern eines Bühnenpodestes oder eines oder mehrerer Bühnenpodestelementen, insbesondere eines Steuerungssystems (1) nach einem der Ansprüche 1 bis 7, wobei die Fernbedienungseinrichtung (5) kabellos mit einem Empfänger des Steuerungssystems (1) verbindbar ist, und wobei Informationen und/oder Daten, insbesondere Telemetriedaten, an eine dem Bühnenpodest oder dem oder den Bühnenpodestelementezugeordnete Sende- und/oder Empfangseinrichtung (8) übertragbar sind, **dadurch gekennzeichnet, dass** die Fernbedienungseinrichtung (5) geeignet ist, eine mobile Kommunikationseinrichtung (6) aufzunehmen und mit einer mobilen Kommunikationseinrichtung (6) zumindest über eine Kommunikationsschnittstelle (7) verbindbar zu sein, wodurch eine Bühnentechnik-Einrichtung (3) und/oder eine Steuereinrichtung (4) des Bühnenpodestes oder der Bühnenpodestelemente durch Benutzung der mobilen Kommunikationseinrichtung (6) fernsteuerbar ist.

9. Fernbedienungseinrichtung (5) nach Anspruch 8, **dadurch gekennzeichnet, dass** die Fernbedienungseinrichtung (5) und/oder die mobile Kommunikationseinrichtung (6) eine Stromversorgung (15), insbesondere einen wiederaufladbaren Akkumulator, umfassen.

10. Fernbedienungseinrichtung (5) nach Anspruch 8 oder 9, **dadurch gekennzeichnet, dass** die Fernbedienungseinrichtung (5) zumindest einen Sicherheitsschalter (13) umfasst, mit dem eine, mehrere und/oder sämtliche fernbediente Bühnentechnik-Einrichtungen (3) der Bühnentechnik (2) anhaltbar und/oder deaktivierbar sind.

11. Fernbedienungseinrichtung (5) nach einem der Ansprüche 8 bis 10, **gekennzeichnet durch** einen Adapter zur Herstellung einer Datenverbindung über ein drahtloses lokales Netzwerk (Wireless Local Area Network, WLAN) und/oder **durch** eine Funkschnittstelle (12), insbesondere für eine bidirektionale Funkstrecke.

12. Fernbedienungseinrichtung (5) nach einem der Ansprüche 8 bis 11, **gekennzeichnet durch** Bewegungssensoren, die eine, insbesondere Dreh- und/oder Schwenk-, Bewegung der Fernbedienungseinrichtung (5) und/oder der mobilen Kommunikationseinrichtung (6) erfassen, wobei die erfassten Bewegungen in Befehle, insbesondere in Steuerbefehle zum Steuers des Bühnenpodestes oder der Bühnenpodestelemente, umwandelbar sind, so dass das Bühnenpodest oder zumindest ein Bühnenpodestelement **durch** Bewegen der Fernbedienungseinrichtung steuerbar ist.

13. Verfahren zum Steuern von Bühnentechnik, die
zumindest eine, insbesondere motorisch bewegbare oder elektrisch betätigbare, Bühnentechnik-Einrichtung,
eine der Bühnentechnik zugeordnete, mit der Bühnentechnik-Einrichtung, insbesondere elektrisch und/oder elektronisch, verbundenen Steuereinrichtung, und
eine mit der Steuereinrichtung und/oder mit der Bühnentechnik-Einrichtung kabellos verbindbare Fernbedienungseinrichtung zum Fernbedienen der mit der Steuereinrichtung verbundenen Bühnentechnik-Einrichtung
umfasst,
wobei die Fernbedienungseinrichtung aus einer mobilen Kommunikationseinrichtung gebildet wird, oder wobei die mobile Kommunikationseinrichtung in die Fernbedienungseinrichtung eingesetzt und mit diesem elektrisch und/oder informationstechnisch verbunden wird,
wobei eine Bühnentechnik-Einrichtung und/oder die Steuereinrichtung über die mobile Kommunikationseinrichtung steuerbar ist, und
wobei bei einer Störung einer Bühnentechnik-Einrichtung und/oder einer Steuereinrichtung Störungsinformationen zwischen der Fernbedienungseinrichtung und der Bühnentechnik austauschbar sind.

14. Verfahren nach Anspruch 13, wobei zum Steuern der Bühnentechnik ein datenverarbeitendes Anwendungsprogramm (App) für Mobilgeräte vorgesehen ist, welches auf die mobile Kommunikationseinrichtung, insbesondere auf einen Datenspeicher der mobilen Kommunikationseinrichtung, herunterladbar ist, wobei das Herunterladen des Anwendungsprogramms und/oder von Freigabedaten zum Freigeben eines oder mehrerer Verfahrensschritte über eine der Bühnentechnik zugeordnete Datenbank erfolgt.

15. Verfahren nach Anspruch 14, wobei vor oder nach dem Herunterladen des datenverarbeitenden Anwendungsprogramms eine Freischaltung und/oder Authentifizierung des Anwenders und/oder Zugangskontrolle durch den Anbieter/Betreiber erfolgt.

16. Verfahren nach Anspruch 15, wobei die Freischaltung mittels Passwort und/oder Code und/oder PIN/TAN erfolgt, und wobei die Freigabeinformationen über eine der Bühnentechnik zugeordnete Datenbank verfügbar sind.

17. Verfahren nach einem der Ansprüche 13 bis 16, wobei das Verfahren einer Sicherheitsanforderungsstufe (Safety Integrity Level, SIL) genügt, insbesondere der Sicherheitsanforderungsstufe SIL 1 oder SIL 2 oder SIL 3.

18. Verwendung einer mobilen Kommunikationseinrichtung (6), wie etwa eines SmartPhones oder eines Tablet-Computers, **dadurch gekennzeichnet, dass** mit der mobilen Kommunikationseinrichtung (6) eine oder mehrere Bühnentechnik-Einrichtungen (3) einer Bühnentechnik (2) steuerbar sind, wobei die Bühnentechnik-Einrichtung (3) aus einer Gruppe von Einrichtungen stammt, die ein Bühnenpodium, ein Bühnenpodestelement, eine Bühnenleuchte, ein Leuchtenhänger, ein Prospektzug, ein Punktzug, eine Vorhangzuganlage und/oder ein Flugwerk sowie weitere Bühnentechnik-Einrichtungen (3) umfasst.

19. Verwendung einer mobilen Kommunikationseinrichtung (6) nach Anspruch 18, **dadurch gekennzeichnet, dass** das Steuern der Bühnentechnik (2) über ein datenverarbeitendes Anwendungsprogramm für Mobilgeräte erfolgt, insbesondere über eine auf einer Datenbank (10) des Betreibers der Bühnentechnik (2) oder einer Datenbank des Anbieters oder Herstellers der Bühnentechnik (2) herunterladbare Applikation (App).

20. Verwendung einer mobilen Kommunikationseinrichtung (6) nach Anspruch 18 oder 19, **dadurch gekennzeichnet, dass** die mobile Kommunikationseinrichtung (6) in eine Fernbedienungseinrichtung (5) mit einer Sicherheitsschaltung, insbesondere mit Not-Aus-Funktion, einsetzbar ist, wodurch das Fernsteuern der Bühnentechnik-Einrichtung (3) einer Sicherheitsanforderungsstufe (Safety Integrity Level, SIL) genügt, vorzugsweise der Sicherheitsanforderungsstufe SIL 1 oder SIL 2 oder SIL 3.
